# EUROPEAN PATENT SPECIFICATION

(11) **EP 4 140 781 B1**
(45) Date of publication and mention of the grant of the patent: **03.04.2024**
(21) Application number: 22181877.6
(22) Date of filing: 29.06.2022
(51) Int. Cl.: B60C 13/00

(54) **PNEUMATIC TIRE**
LUFTREIFEN
PNEUMATIQUE

(30) Priority: 27.08.2021 JP 2021139149; 27.08.2021 JP 2021139155
(43) Date of publication of application: 01.03.2023
(73) Proprietor: Toyo Tire Corporation, Itami-shi, Hyogo 664-0847 (JP)
(72) Inventor: KAMADA, Nobuyuki, Itami-shi, Hyogo 664-0847 (JP)
(74) Representative: Ricker, Mathias

(56) References cited:
- EP-A1- 3 409 508
- EP-A1- 3 825 153
- JP-A- 2013 244 804
- JP-A- 2014 180 947
- US-A- 5 263 525
- US-B2- 8 776 852

## Description

### BACKGROUND OF THE INVENTION

### 1. Field of the Invention

The present invention relates to a pneumatic tire.

### 2. Description of the Related Art

There has been known a pneumatic tire provided with a pattern formed by arranging a plurality of ridges extending along a tire surface on a surface of a sidewall.

Many of patterns in related art provided on the surface of the sidewall are formed by arranging many ridges extending in straight lines at equal intervals. Moreover, the JP 2014-180947 A (Patent Literature 1) discloses a pattern in which curved-line ridges are arranged at equal intervals. Every pattern increases designability of the sidewall.

The EP 3 825 153 A1 discloses a pneumatic tire including a pattern portion on a surface of a sidewall portion. The pattern portion 5 includes an outer pattern 6 and an inner pattern. The outer pattern 6 includes a plurality of outer ridges disposed concentrically around a first point on a tire circumferential line on an outer side in a tire radial direction and extending toward a second point, on the tire circumferential line, which is different from the first point. The inner pattern includes a plurality of inner ridges disposed concentrically around the second point on an inner side in the tire radial direction and extending toward the first point. Each of the outer ridges connects with one of the inner ridges on the tire circumferential line.

The EP 3 409 508 A1 discloses a pneumatic tire including a pattern portion that is formed on a tire surface and in which ridges are arranged in a nest shape having a center point, the ridges including ridgelines having a curved portion in plan view, in which a height of each of the ridges is from 0.2 mm to 0.5 mm, and adjacent ridges are arranged at a constant pitch of from 0.15 mm to 0.35 mm.

The US 5,263,525 A discloses a pneumatic tire which is provided on a sidewall with an embossed mark, the embossed mark has an indent portion and an outline portion, the outline portion has a top surface having a light color different from a dark color of the light color different from a dark color of the sidewall surface the bottom of the indent portion is provided with a rough surface to have a less luster than the sidewall surface, and preferably, the radial height of the mark is in the range from 15 mm to 60 mm, and the bottom of the indent portion is provided with a cross mesh pattern whose mesh pitches are 0.01 to 0.1 times the radial height of the mark.

The JP 2013/244804 A discloses that a sidewall part of a pneumatic tire has a plurality of patterns distinguished visibly from surrounding regions. Each of the patterns includes a plurality of first regions and second regions which are arranged alternately in a circumferential manner along respective virtual encircling lines and are distinguished from each other by unevenness on a sidewall surface or light reflection characteristics. Either of the first regions arranged along the virtual encircling lines positioned outside in a radial direction contacts partially with one of the first regions arranged along the virtual encircling lines positioned inside in the radial direction and is provided while being displaced in a first direction of circumferential directions of the virtual encircling lines. The patterns have portions in which a distance between adjacent two encircling lines varies continuously as advancing in the radial direction.

The US 8,776,852 B2 discloses a pneumatic tire including a decorative portion having at least one ridge group that extends band-like in the tire circumferential direction on the outer surface of the side wall. Each of the ridge groups is formed from a bundle of ridges. An entirety of each of the ridge groups is formed into a wave-like shape that extends in the tire circumferential direction, and each of the ridge groups is arranged so as to mutually cross at a plurality of locations in the tire circumferential direction. Therefore, the decorative portion is noticeable, and the decoratability of the tire can be enhanced.

### SUMMARY OF THE INVENTION

Patterns in various modes have been proposed until now; however, an innovative pattern to create new-type visual effects is required.

An object of the invention is to provide a pneumatic tire in which visual effects can be created.

According to an aspect of the invention, there is provided a pneumatic tire including a pattern on a surface of a sidewall, in which the pattern has a plurality of annular figures that are longer in a tire circumferential direction than in a tire radial direction, and the plural annular figures have different sizes from one another, which are arranged so that a larger annular figure is placed on an outer side of a smaller annular figure without crossing each other, and so that intervals of the annular figures differ on one side and the other side in the tire circumferential direction.

As the present invention has the above features, contrast in the tire circumferential direction is improved and visual effects having directionality can be created.

### BRIEF DESCRIPTION OF THE DRAWINGS

Fig. 1 is a half cross-sectional view of a pneumatic tire in an axial direction;
Fig. 2 is a view of the pneumatic tire according to a first embodiment when seen from a tire axial direction;
Fig. 3 is an enlarged view of a pattern in the pneumatic tire according to the first embodiment;
Fig. 4 is a cross-sectional view of ridges forming annular figures;
Fig. 5 is a cross-sectional view of ridges forming annular figures;
Fig. 6 is a cross-sectional view of ridges forming annular figures;
Fig. 7 is a cross-sectional view of ridges forming annular figures;
Fig. 8 is a cross-sectional view of ridges forming annular figures;
Fig. 9 is a cross-sectional view of ridges forming annular figures;
Fig. 10 is a view of a pneumatic tire according to a modification example of the first embodiment when seen from the tire axial direction;
Fig. 11 is a view of a pneumatic tire according to a modification example of the first embodiment when seen from the tire axial direction;
Fig. 12 is a view of a pneumatic tire according to a modification example of the first embodiment when seen from the tire axial direction;
Fig. 13 is a view of a pneumatic tire according to a modification example of the first embodiment when seen from the tire axial direction;
Fig. 14 is a view of a pneumatic tire according to a modification example of the first embodiment when seen from the tire axial direction;
Fig. 15 is a view of a pneumatic tire according to a second embodiment when seen from the tire axial direction;
Fig. 16 is an enlarged view of a pattern in the pneumatic tire according to the second embodiment;
Fig. 17 is a view of a pneumatic tire according to a modification example of the second embodiment when seen from the tire axial direction;
Fig. 18 is a view of a pneumatic tire according to a modification example of the second embodiment when seen from the tire axial direction;
Fig. 19 is a view of a pneumatic tire according to a modification example of the second embodiment when seen from the tire axial direction;
Fig. 20 is a view of a pneumatic tire according to a modification example of the second embodiment when seen from the tire axial direction; and
Fig. 21 is a view of a decorative area of a pneumatic tire according to a modification example of the second embodiment when seen from the tire axial direction.

### DESCRIPTION OF EMBODIMENTS

Hereinafter, embodiments of the present invention will be explained with reference to the drawings.

### [First Embodiment]

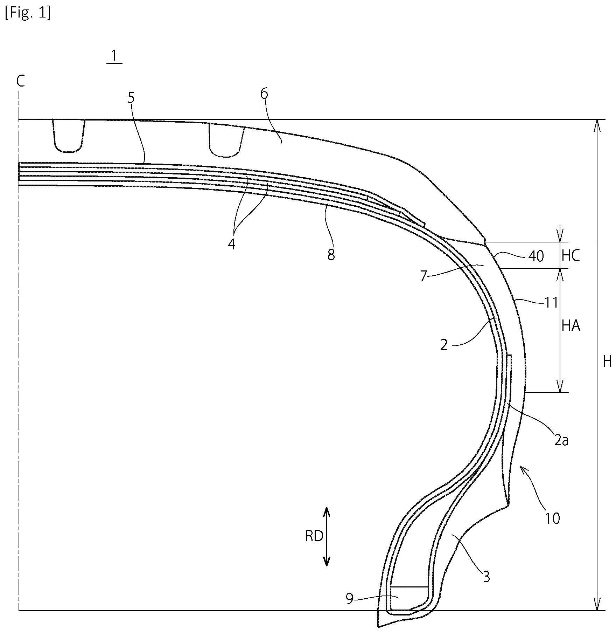

A pneumatic tire 1 according to a first embodiment has the same structure as a common radial tire except a structure of a sidewall. Fig. 1 shows a cross-sectional structure of the pneumatic tire 1 according to the embodiment. Fig. 1 shows only a half of the structure in a tire axial direction, and the actual pneumatic tire 1 is approximately right-and-left symmetrical with respect to a center line C.

The pneumatic tire 1 is provided with beads 9 on both sides in the tire axial direction. Each bead 9 includes a bead core formed of steel wire wound in a circular shape and a rubber bead filler provided on an outer side in a radial direction of the bead core.

One or two carcass plies 2 are hung across the beads 9 on both sides in the tire axial direction. The carcass ply 2 is a sheet-shaped member in which many ply cords aligned in a direction orthogonal to a tire circumferential direction are coated with rubber. The carcass plies 2 form a frame shape of the pneumatic tire 1 between the beads 9 on both sides in the tire axial direction and wrap the beads 9 by being turned up from the inside to the outside in the tire axial direction and being wound up around the beads 9. Moreover, a rubber chafer 3 is provided at a place on an outer side in the tire axial direction of a turned-up portion 2a of the carcass plies 2.

One or a plurality of belts 4 are provided on an outer side in a tire radial direction of the carcass plies 2, and a belt reinforcing layer 5 is provided on an outer side in the tire radial direction of the belts 4. The belt 4 is a member formed of many steel cords coated with rubber. The belt reinforcing layer 5 is a member formed of many organic fiber cords coated with rubber. A tread rubber 6 is provided on an outer side in the tire radial direction of the belt reinforcing layer 5. Many grooves are formed on the tread rubber 6 to form a tread pattern.

Sidewall rubbers 7 are provided on both sides in the tire axial direction of the carcass plies 2. The tread rubber 6 and the sidewall rubber 7 overlap each other on a buttress; however, any of the tread rubber 6 and the sidewall rubber 7 may overlap on the tire surface side. A portion of the sidewall rubber 7 on an inner side in the tire radial direction extends close to the bead 9 and covers part of the rubber chafer 3. In the embodiment, not only a portion where the sidewall rubber 7 appears on the tire surface but also the entire range which can be visually recognized when the pneumatic tire 1 is seen from the tire axial direction is regarded as a sidewall 10.

A sheet-shaped inner liner 8 made of rubber with low air permeability is bonded to the inside of the carcass ply 2. In addition to these members, members such as a belt-under pad and a chafer are provided according to functional need of the tire.

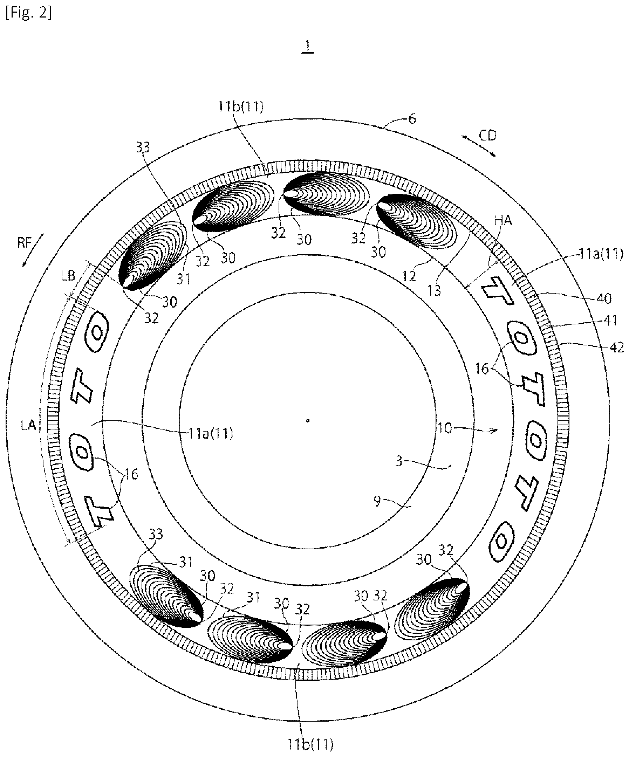

As shown in Fig. 1 and Fig. 2, a decorative area 11 and a band-shaped area 40 are provided on at least one of the sidewalls 10 on both sides in the tire axial direction.

The decorative area 11 is an annular area centered at a tire rotation axis. The decorative area 11 is an area with a fixed width, which is surrounded by an inner diameter-side line 12 having a circular shape with a small diameter and an outer diameter-side line 13 having a circular shape with a larger diameter than the inner diameter-side line 12. The inner diameter-side line 12 and the outer diameter-side line 13 may be lines formed by recesses/protrusions or steps on the tire surface, or may be virtual lines not actually exist. A width HA in a tire radial direction RD of the decorative area 11 is 5% or more to 60% or less (preferably 10% or more to 35% or less) of a tire cross-sectional height H (a length from an inner diameter end of the bead core to an outer diameter surface of the pneumatic tire 1 in the tire radial direction RD).

A place of the decorative area 11 in the tire radial direction RD is a place including a position of the maximum width of the pneumatic tire 1. Here, the position of the maximum width of the pneumatic tire 1 is a position where a length in the tire axial direction from the surface of one sidewall 10 in the tire axial direction to the surface of the other sidewall 10 in the tire axial direction is the longest.

The decorative area 11 may be provided so as to include a place where steps tend to appear on the surface of the sidewall 10. The place where steps tend to appear on the surface of the sidewall 10 typically includes places at ends of tire constituting members such as a place where an interface between the tread rubber 6 and the sidewall rubber 7 appears on the tire surface and a place overlapping an end of the turned-up portion 2a of the carcass plies 2 in a tire width direction.

As shown in Fig. 2, marking areas 11a in which markings 16 are formed are provided at two places opposite to each other in the tire radial direction in the annular decorative area 11. Pattern areas 11b in which patterns 30 are formed are provided at two places opposite to each other in the tire radial direction in the annular decorative area 11. Each pattern area 11b is provided so as to be sandwiched between the two marking areas 11a in the tire circumferential direction.

In order to allow sufficient space between the marking area 11a and the pattern area 11b which are adjacent to each other in the tire circumferential direction, the minimum value of an interval LB between an end of the marking area 11a and an end of the pattern area 11b (a length from and end of the marking 16 provided in the marking area 11a to an end of the pattern 30 provided in the pattern area 11b in a tire circumferential direction CD) is set to 3 mm. Moreover, in order to secure a sufficient area of the patterns 30 provided in the decorative area 11, the maximum value of the interval LB between the marking area 11a and the pattern area 11b is set to 60% of a length LA of the marking area 11a in the tire circumferential direction CD (an interval between markings 16 provided at both ends in the tire circumferential direction of the marking area 11a).

One or a plurality of markings 16 are formed to be arranged in the tire circumferential direction CD in the marking area 11a. The markings 16 are formed of letters, numerals, a symbol, a figure, or the like, indicating information such as a manufacturer, a brand, a type, and a size of the tire. The markings 16 included in the marking area 11a are formed by being edged by lines of grooves or ridges.

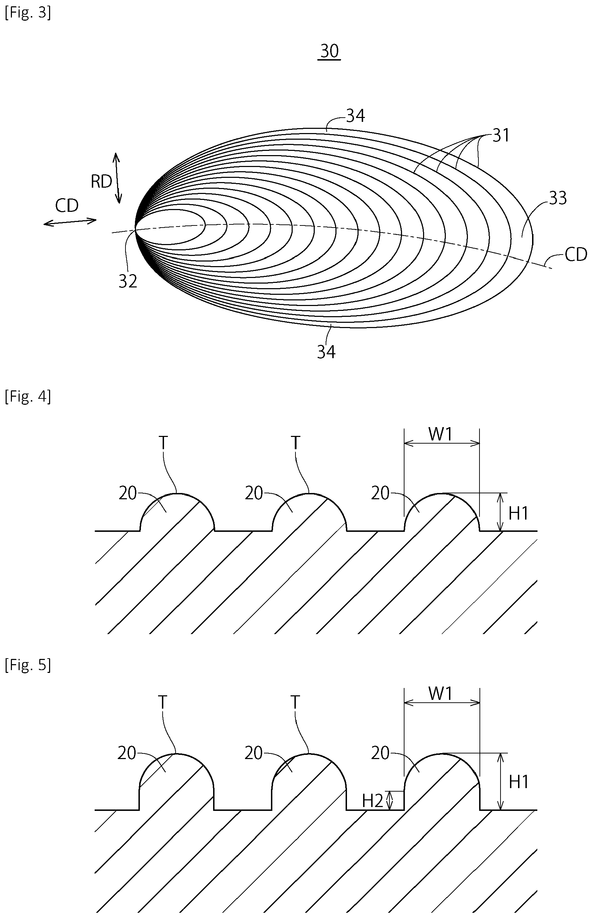

A plurality of patterns 30 are formed to be arranged in the tire circumferential direction CD in the pattern area 11b. The pattern 30 is formed by combining a plurality of annular figures 31 having sizes different from one another as shown in Fig. 2 and Fig. 3. It is preferable that the pattern 30 is formed by combining five or more annular figures 31.

Any of the plural annular figures 31 forming the pattern 30 is an annular figure that is longer in the tire circumferential direction CD than in the tire radial direction RD. The plural annular figures 31 have an approximately elliptical shape in the embodiment.

A ratio of a length in the tire radial direction RD to a length in the tire circumferential direction CD of the plural annular figure 31 is preferably 0.5 or more to 0.8 or less. A length in the tire radial direction RD of the largest annular figure 31 in the plural annular figures 31 is preferably 50% or more to 95% or less of the width HA in the tire radial direction RD of the decorative area 11.

The plural annular figures 31 forming the pattern 30 are arranged so that a larger annular figure 31 is placed on an outer side of a smaller annular figure 31 without crossing each other. The plural annular figures 31 are also arranged so that intervals of the annular figures 31 differ on one side and on the other side in the tire circumferential direction.

Specifically, the larger annular figures 31 are sequentially arranged on the outer side of smaller annular figures 31 so as to surround smaller annular figures 31 without contacting the figures except at an overlapping part 32. That is, the plural annular figures 31 are arranged so as to form the overlapping part 32 where the annular figures 31 overlap one another at one end part in the tire circumferential direction CD, to form a first separated part 33 where the annular figures 31 are arranged at intervals on the other side in the tire circumferential direction CD, and to form second separated parts 34 where the annular figures 31 are arranged at intervals on both sides in the tire radial direction RD.

The plural annular figures 31 may be provided so as to be disposed at equal intervals at the first separated part 33 provided on the other side in the tire circumferential direction CD. It is also preferable that the plural annular figures 31 are provided so that the interval of the annular figures 31 is gradually increased from the annular figure 31 arranged on an inner side toward an outer side at the first separated part 33. A specific numerical value of the interval of the annular figures 31 at the first separated part 33 (a distance of a position farthest from the overlapping part 32 on the annular figure 31) is, for example, 0.6 mm or more to 2.4 mm or less.

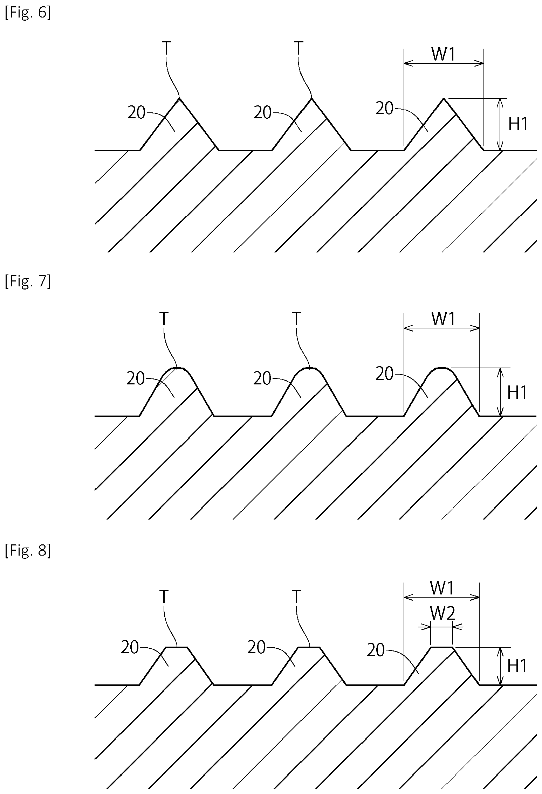

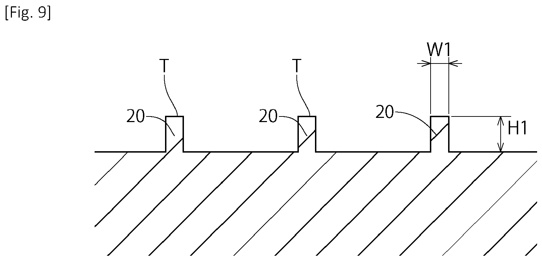

Any of the plural annular figures 31 is formed by connecting recessed grooves recessed from the surface of the sidewall or ridges protruding from the surface of the sidewall into a ring shape. When the annular figures 31 are formed of ridges 20, a cross-sectional shape of the ridges 20 in a direction orthogonal to a longitudinal direction includes a semicircular shape as shown in Fig. 4, a shape made of a semicircle and straight lines thereunder as shown in Fig. 5, a triangular shape as shown in Fig. 6, a shape in which an apex of a triangle is rounded by an arc as shown in Fig. 7, a trapezoidal shape as shown in Fig. 8, a rectangular shape as shown in Fig. 9, and so on. Here, the shape in which the apex of the triangle is rounded is a kind of triangles. Moreover, shapes in which the above cross-sectional shapes are slightly deformed such as a sawtooth shape obtained by deforming triangles in Fig. 6 to be inclined or other shapes may be adopted, though not shown. Note that lines drawn as the annular figures 31 in Fig. 2 and Fig. 3 are center lines in a width direction of the ridges 20 (lines at positions denoted by "T" in Fig. 4 to Fig. 9).

In the ridges 20 with any of the cross-sectional shapes shown in Fig. 4 to Fig. 9, a height H1 of the ridge 20 is 0.1 mm or more to 0.8 mm or less (preferably 0.1 mm or more to 0.4 mm or less). In the ridges 20 with any of the cross-sectional shapes, a width W1 of the ridge 20 is 0.1 mm or more to 1.0 mm or less. The ridges 20 can be formed by a mold to be used at the time of vulcanization molding. The ridges 20 can be formed by various processing such as machine processing and laser processing. Small ridges 20 with the height H1 of approximately 0.1 to 0.2 mm and the width W1 of approximately 0.1 mm to 0.2 mm can be formed by a mold in which fine irregularities are formed by laser processing.

When a radius of the semicircles in Fig. 4 and Fig. 5 is "R", a length H2 of the straight line in the ridge 20 having the cross-sectional shape made of the semicircle and the straight lines shown in Fig. 5 is represented by (the height H1 of the ridge 20) - (the radius R of the semicircle). Moreover, in the ridge 20 having the trapezoidal shape in cross section as shown in Fig. 8, a length W2 of an upper base is 20% or more to 50% or less of a length of a lower base (namely, the width W1 of the ridge 20).

In the embodiment, a plurality of patterns 30 are provided in the decorative area 11 at intervals in the tire circumferential direction CD as shown in Fig. 2. All patterns 30 are provided in the decorative area 11 so that the overlapping parts 32 are placed on one side in the tire circumferential direction CD. It is also preferable that the plural patterns 30 are arranged so that other patterns 30 are placed at opposite positions with the tire rotation axis interposed therebetween when seen from the tire axial direction as shown in Fig. 2.

The band-shaped area 40 is an annular area provided adjacent to an outer circumference of the decorative area 11. A plurality of ridges 41 raised from an outer surface of the sidewall 10 are provided in the band-shaped area 40. The plural ridges 41 are arranged at equal intervals of 0.3 to 1.9 mm in the tire circumferential direction CD according to the embodiment. The band-shaped area 40 may be provided at part of the circumference in the tire circumferential direction CD, but is provided over the entire circumference in the tire circumferential direction CD in this example. Accordingly, the band-shaped area 40 is formed in an annular shape adjacent to the outside of the decorative area 11 and surrounding the entire circumference thereof. A dimension HC (see Fig. 1) of the band-shaped area 40 in the tire radial direction RD is preferably 5 to 12 mm.

When the above band-shaped area 40 is provided, irregularities and sink marks called bear generated at an interface between members of the tread 6 and the sidewall 10 can be suppressed. Moreover, the black band-shaped area 40 is formed by light attenuation effects obtained by providing the ridges 41, which can emphasize the decorative area 11.

The band-shaped area 40 may be provided on the sidewall 10 so as to include the place where steps tend to appear on the surface of the sidewall 10 such as the places at the ends of the tire constituting members including the place where the interface between the tread rubber 6 and the sidewall rubber 7 appears on the tire surface, the place overlapping the end of the turned-up portion 2a of the carcass plies 2 in the tire width direction, a place overlapping an end of the belt 4 in the tire width direction, and the like in the same manner as the decorative area 11. A parting line 42 which is a dividing line between a tread mold and a sidewall mold in a tire mold may be formed at a boundary portion on the outer side in the tire radial direction of the band-shaped area 40.

The pneumatic tire 1 according to the embodiment includes the pattern 30 in the sidewall 10, in which the plural annular figures 31 overlapping at one end in the tire circumferential direction and spaced on the other side in the tire circumferential direction as well as on both sides in the tire radial direction are arranged; therefore, contrast (light and shade) with a sense of depth is generated from the first separated part 33 toward the overlapping part 32, which creates innovative visual effects.

As the plural annular figures 31 are arranged at equal intervals in the first separated part 33 and the second separated parts 34, a smoother sense of depth is generated in the pattern 30. When the plural annular figures 31 are provided so that the interval of the annular figures 31 is gradually increased from the annular figure 31 arranged on the inner side toward the outer side, the sense of depth created from the first separated part 33 toward the overlapping part 32 can be emphasized.

In a case where the pneumatic tire 1 is a tire in which a rotation direction is designated, all patterns 30 to be provided on the surface of the sidewall 10 may be arranged so that the overlapping parts 32 are placed on the front side in a rotation direction RF (see Fig. 2). When the patterns 30 are arranged in this manner, the rotation direction can be indicated while having excellent designability.

### [Modification Examples of First Embodiment]

The above first embodiment is cited as an example and does not intend to limit the scope of the invention. The novel embodiment can be achieved in other various modes, and various omissions, replacements, modifications may occur in a scope not departing from the gist of the invention.

For example, the shape of the plural annular figures 31 is not limited to the approximately elliptical shape in the above embodiment. Any annular figure that is longer in the tire circumferential direction CD than in the tire radial direction RD when seen from the direction perpendicular to the surface of the sidewall 10 (tire axial direction) may be adopted. A preferred shape among such annular figures is a shape called oval. The oval is a closed annular shape mainly formed by a curved line (for example, more than half of the entire length of lines forming a contour of the annular figure 31 is a curved line). The oval includes an ellipse, a perfect circle, an ovoid shape, and the like, in addition to the elliptical shape in the embodiment. The oval also includes a closed curved line formed by crossing between the surface of a cone and a plane perfectly traversing the cone.

In the above embodiment, all patterns 30 are provided on the surface of the sidewall 10 so that the overlapping parts 32 are placed on one side in the tire circumferential direction CD; however, various arrangements of the overlapping parts 32 can be considered.

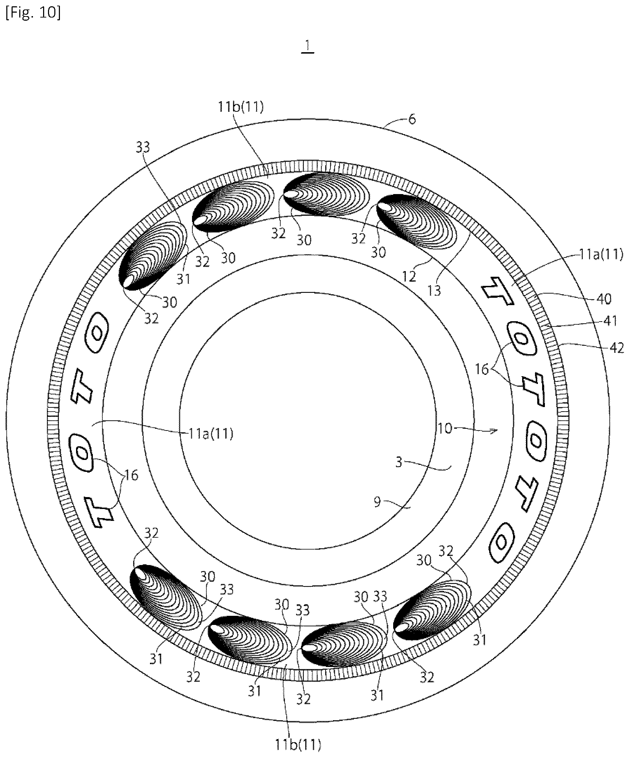

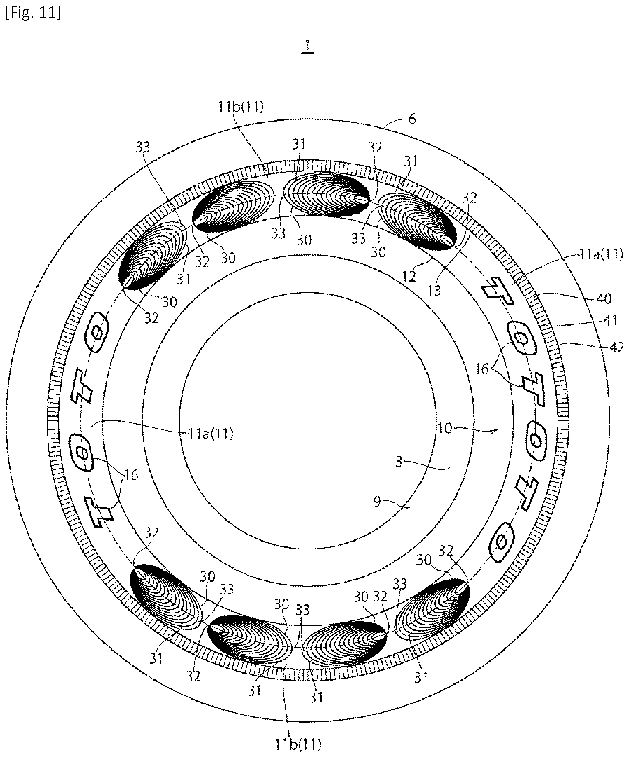

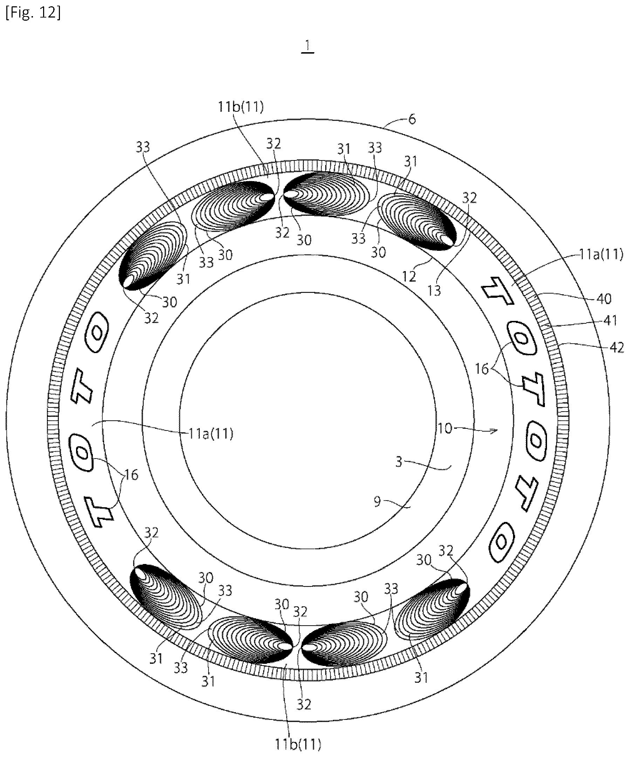

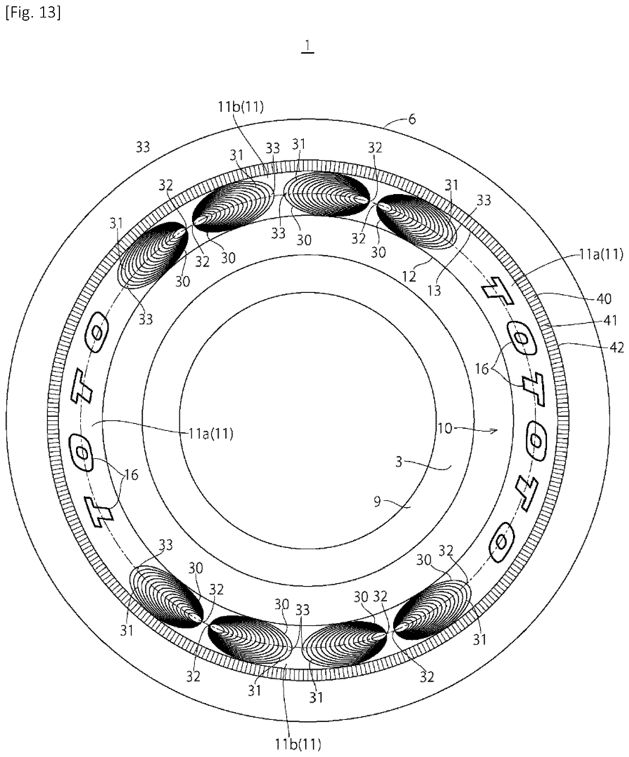

For example, as shown in Fig. 10, the patterns 30 may be arranged so that the overlapping parts 32 are directed to one of the marking areas 11a (the marking area 11a on the left side in Fig. 10), or the patterns 30 may be arranged so that the overlapping parts 32 are directed to the marking areas 11a close to the patterns 30 as shown in Fig. 11. It is also preferable that the patterns 30 are arranged so that directions of the overlapping parts 32 are alternately changed in the tire circumferential direction CD as shown in Fig. 12 and Fig. 13. When a pair of patterns 30 adjacent to the marking area 11a in the tire circumferential direction CD are arranged so that the overlapping parts 32 are directed to the marking area 11a as shown in Fig. 10. Fig. 11 and Fig. 12, a customer tends to fix his/her eyes on the marking area 11a sandwiched by the overlapping parts 32, which can emphasize the markings 16 provided in the making area 11a.

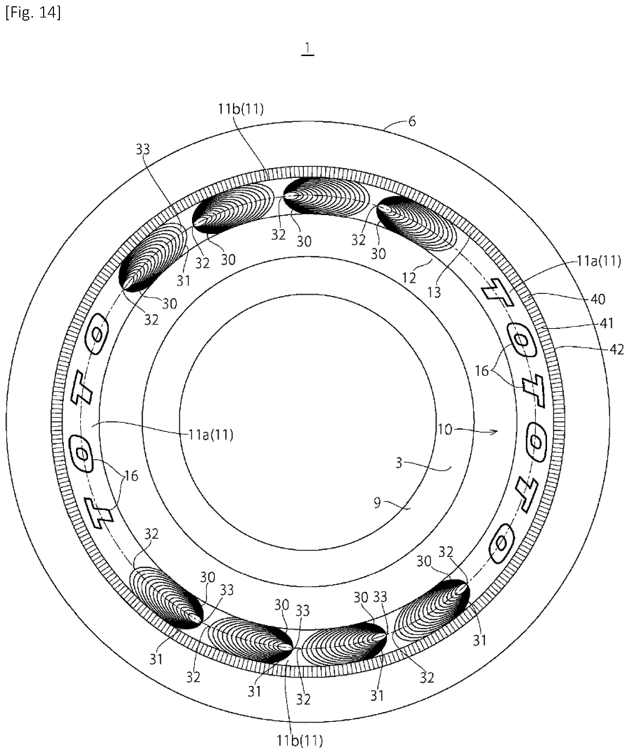

When many annular figures 31 are provided in one pattern 30, parts of large annular figures 31 may be broken without being held inside the decorative area 11 as shown in Fig. 14. In such case, it is preferable to provide many annular figures 31 so that five or more annular figures 31 in one pattern 30 are held inside the decorative area 11.

Although two pattern areas 11b are provided on one sidewall 10 in the above embodiment, one pattern area 11b or three or more pattern areas 11b may be provided on one sidewall 10.

Moreover, four patterns 30 are provided in one pattern area 11b in the above embodiment; however, an arbitrary number of patterns 30 may be provided in one pattern area 11b.

### [Second Embodiment]

Next, a second embodiment of the present invention will be explained with reference to the drawings.

A pneumatic tire 100 according to the embodiment has the same structure as a common radial tire except a structure of the sidewall. The pneumatic tire 100 according to the embodiment is a tire having the same cross-sectional structure as the pneumatic tire 1 according to the first embodiment shown in Fig. 1. The pneumatic tire 100 according to the embodiment has the same arrangement of the decorative area 11 and the band-shaped area 40 in the sidewall 10, but differs from the pneumatic tire 1 according to the first embodiment in patterns provided in the decorative area 11. Accordingly, same symbols are given to the same as or corresponding to elements in the first embodiment, and the detailed explanation for the cross-sectional structure of the pneumatic tire 100 and the arrangement of the decorative area 11 and the band-shaped area 40 in the sidewall 10 is omitted. Patterns 130 provided in the decorative area 11 of the pneumatic tire 100 according to the embodiment will be explained in detail below.

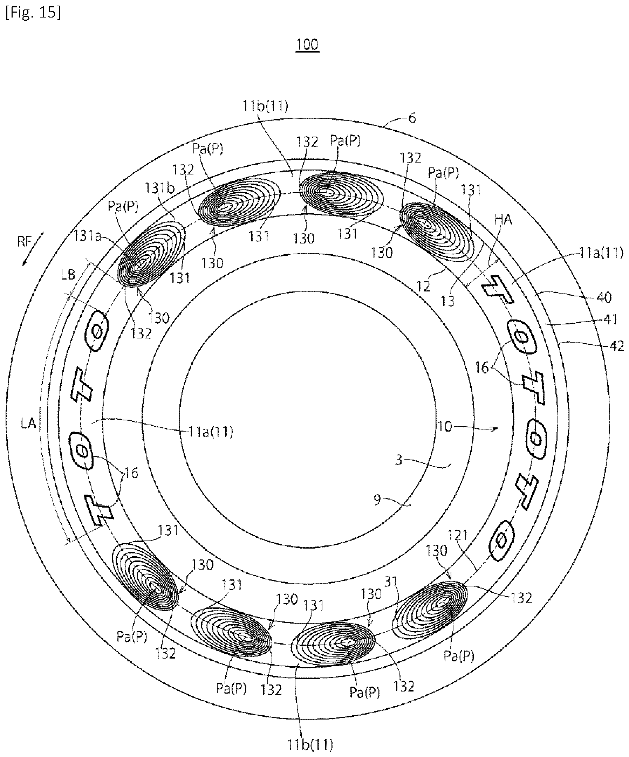

As shown in Fig. 15, the marking areas 11a in which the markings 16 are formed are provided at two opposite places in the annular decorative area 11. The pattern areas 11b in which the patterns 130 are formed are formed at two opposite places in the annular decorative area 11 so as to be sandwiched between the two marking areas 11a.

In order to allow sufficient space between the marking area 11a and the pattern area 11b which are adjacent to each other, the minimum value of an interval LB between an end of the marking area 11a and an end of the pattern area 11b (a length from an end of the marking 16 provided in the marking area 11a to an end of the pattern 130 provided in the pattern area 11b in the tire circumferential direction CD) is set to 3 mm. Moreover, in order to secure a sufficient area of the patterns 130 provided in the decorative area 11, the maximum value of the interval LB between the marking area 11a and the pattern area 11b is set to 60% of a length LA in the tire circumferential direction of the marking area 11a (an interval between the markings 16 provided at both ends in the tire circumferential direction of the marking area 11a).

One or a plurality of markings 16 are formed to be arranged in the tire circumferential direction CD in the marking area 11a. The markings 16 are formed of letters, numerals, a symbol, a figure, or the like, indicating information such as a manufacturer, a brand, a type, and a size of the tire. The markings 16 included in the marking area 11a are formed by being edged by lines of grooves or ridges.

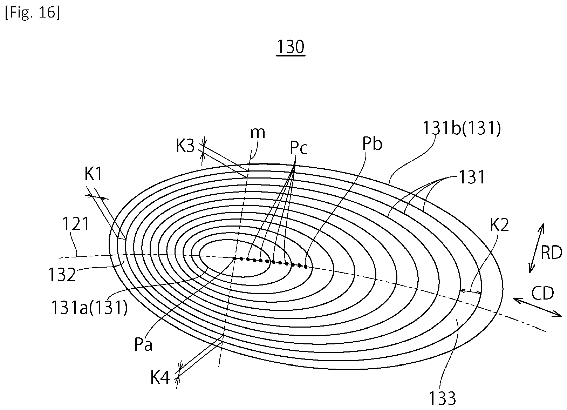

A plurality of patterns 130 are formed to be arranged in the tire circumferential direction CD in the pattern area 11b. The pattern 130 is formed by combining a plurality of annular figures 131 having sizes different from one another as shown in Fig. 15 and Fig. 16. It is preferable that the pattern 130 is formed by combining five or more annular figures 131.

Any of the plural annular figures 131 forming the pattern 130 is an annular figure that is longer in the tire circumferential direction CD than in the tire radial direction RD. The plural annular figures 131 have an approximately elliptical shape in the embodiment.

A ratio of a length in the tire radial direction RD to a length in the tire circumferential direction CD in the plural annular figures 131 is preferably 0.5 or more to 0.8 or less. A length in the tire radial direction RD of the largest annular figure 131 in the plural annular figures 131 is preferably 50% or more to 95% or less of the width HA in the tire radial direction RD of the decorative area 11.

The plural annular figures 131 forming the pattern 130 are arranged so that a larger annular figure 131 is placed on an outer side of a smaller annular figure 131 without crossing each other. The plural annular figures 131 are also arranged so that intervals of the annular figures 131 differ on one side and on the other side in the tire circumferential direction.

Specifically, a larger annular figure 131 is arranged on the outer side of a smaller annular figure 131 with an interval so as to surround the annular figures 131 placed on the inner side. The plural annular figures 131 are arranged so that a dense part 132 is formed on one side of a smallest annular figure 132a in the tire circumferential direction CD and a separated part 133 is formed on the other side.

An interval K1 between adjacent annular figures 131 in the tire circumferential direction CD in the dense part 132 is smaller than an interval K2 between annular figures 131 in the tire circumferential direction CD in the separated part 133 (see Fig. 16). That is, the annular figures 131 are arranged densely so that intervals between the annular figures 131 in the tire circumferential direction CD are narrower on one side of the smallest annular figure 131 than in the other side in the tire width direction. The interval K2 between adjacent annular figures 131 in the separated part 133 is preferably 1.1 times or more to 5.0 times or less of the interval K1 in the dense part 132. The interval K1 between the annular figures 131 in the dense part 132 and the interval K2 between the annular figures 131 in the separated part 133 may be gradually increased from the inner side toward the outer side, and may be equal.

Here, the interval between adjacent annular figures 131 in the tire circumferential direction CD indicates a distance from a center P to the farthest position on the annular figure 131 in the tire circumferential direction CD, which is a direction between points on a major axis when the annular figures 131 have an elliptical shape.

In the plural annularfigures 131, a center Pa of a smallest annular figure 131a is arranged at a position closerto one side in the tire circumferential direction CD than a center Pb of a largest annular figure 131b, and centers Pc of other annular figures 131 are arranged between the center Pa of the smallest annular figure 131a and the center Pb of the largest annular figure 131b. The centers Pa, Pb, and Pc of the annular figures 131 (hereinafter, these may be collectively referred to as the center P) are preferably provided on one reference line 121. The center P of each annular figure 131 corresponds to a center of gravity of a plane having a shape drawn by the annular figure 131. When the shape drawn by the annular figure 131 is a shape in which the center is mathematically defined, the center P of the annular figure 131 is determined in accordance with the definition.

In the plural annular figures 131, when comparing an interval K3 between adjacent annular figures 131 on an outer side of the center P in the tire radial direction RD with an interval K4 on an inner side in the tire radial direction RD, the interval K3 and the interval K4 may be equal to each other as well as differ from each other. When these intervals differ from each other, it is preferable that the interval K3 on the outer side in the tire radial direction RD is larger than the interval K4 on the inner side in the tire radial direction RD. The interval K3 and the interval K4 are distances between points on a straight line "m" which passes through the center Pa of the smallest annular figure 131 and is parallel to the tire radial direction RD.

The plural patterns 130 provided in the pattern area 11b is preferably arranged so that the centers P of the plural annular figures 131 forming each pattern 130 are provided on one reference line 121 as shown in Fig. 15. The reference line 121 is one line extending in the tire circumferential direction at a particular position in the tire radial direction on the decorative area 11. The reference line 121 is not actually drawn on the decorative area 11 but is a virtual line. The position of the reference line 121 in the tire radial direction is preferably a central position in the tire radial direction on the decorative area 11. It is also preferable that the reference line 121 is a line drawing a circle about the tire rotation axis in which a radius has a length of 45% or more to 65% or less of the tire cross-sectional height H.

Any of the plural annular figures 131 is formed by connecting recessed grooves recessed from the surface of the sidewall or ridges protruding from the surface of the sidewall into a ring shape. When the annular figures 31 are formed of ridges 20, a cross-sectional shape of the ridges 20 in a direction orthogonal to a longitudinal direction includes a semicircular shape as shown in Fig. 4, a shape made of a semicircle and straight lines thereunder as shown in Fig. 5, a triangular shape as shown in Fig. 6, a shape in which an apex of a triangle is rounded by an arc as shown in Fig. 7, a trapezoidal shape as shown in Fig. 8, a rectangular shape as shown in Fig. 9, and so on. Here, the shape in which the apex of the triangle is rounded is a kind of triangles. Moreover, shapes in which the above cross-sectional shapes are slightly deformed such as a sawtooth shape obtained by deforming triangles in Fig. 6 to be inclined or other shapes may be adopted, though not shown. Note that lines drawn as the annular figures 131 in Fig. 15 and Fig. 16 are center lines in a width direction of the ridges 20 (lines at positions denoted by "T" in Fig. 4 to Fig. 9).

In the ridges 20 with any of the cross-sectional shapes shown in Fig. 4 to Fig. 9, a height H1 of the ridge 20 is 0.1 mm or more to 0.8 mm or less (preferably 0.1 mm or more to 0.4 mm or less). In the ridges 20 with any of the cross-sectional shapes, a width W1 of the ridge 20 is 0.1 mm or more to 1.0 mm or less. The ridges 20 can be formed by a mold to be used at the time of vulcanization molding. The ridges 20 can be formed by various processing such as machine processing and laser processing. Small ridges 20 with the height H1 of approximately 0.1 to 0.2 mm and the width W1 of approximately 0.1 mm to 0.2 mm can be formed by a mold in which fine irregularities are formed by laser processing.

When a radius of the semicircle in Fig. 4 and Fig. 5 is "R", a length H2 of the straight line in the ridge 20 having the cross-sectional shape made of the semicircle and the straight lines shown in Fig. 5 is represented by (the height H1 of the ridge 20) - (the radius R of the semicircle). Moreover, in the ridge 20 having the trapezoidal shape in cross section as shown in Fig. 8, a length W of an upper base is 20% or more to 50% or less of a length of a lower base (namely, a width W1 of the ridge 20).

In the embodiment, a plurality of patterns 130 are provided in the decorative area 11 at intervals in the tire circumferential direction CD as shown in Fig. 15. It is also preferable that the plural patterns 130 are arranged so that other patterns 130 are placed at opposite positions with the tire rotation axis interposed therebetween when seen from the tire axial direction as shown in Fig. 15.

The band-shaped area 40 is an annular area provided adjacent to an outer circumference of the decorative area 11. A plurality of ridges 41 raised from an outer surface of the sidewall 10 are provided in the band-shaped area 40. The plural ridges 41 are arranged at equal intervals of 0.3 to 1.0 mm in the tire circumferential direction CD according to the embodiment. The band-shaped area 40 may be provided at part of the circumference in the tire circumferential direction CD, but is provided over the entire circumference in the tire circumferential direction CD in this example. Accordingly, the band-shaped area 40 is formed in an annular shape adjacent to the outside of the decorative area 11 and surrounding the entire circumference thereof. A dimension HC (see Fig. 1) of the band-shaped area 40 in the tire radial direction RD is preferably 5 to 12 mm.

When the above band-shaped area 40 is provided, irregularities and sink marks called bear generated at an interface between members of the tread 6 and the sidewall 10 can be suppressed. Moreover, the black band-shaped area 40 is formed by light attenuation effects obtained by providing the ridges 41, which can emphasize the decorative area 11.

The band-shaped area 40 may be provided on the sidewall 10 so as to include the place where steps tend to appear on the surface of the sidewall 10 such as the places at the ends of the tire constituting members including the place where the interface between the tread rubber 6 and the sidewall rubber 7 appears on the tire surface, the place overlapping the end of the turned-up portion 2a of the carcass plies 2 in a tire width direction, the place overlapping an end of the belt 4 in the tire width direction, and the like in the same manner as the decorative area 11. A parting line 42 which is a dividing line between a tread mold and a sidewall mold in a tire mold may be formed at a boundary portion on the outer side in the tire radial direction of the band-shaped area 40.

The pneumatic tire 1 according to the embodiment includes the pattern 130 on the sidewall 10, in which larger annular figures 131 are arranged on the outer side of the smaller annular figures 131 so as to form the dense part 132 on one side of the smallest annular figure 131a in the tire circumferential direction CD, in which intervals of the annular figures 131 are narrower than those in the separated part 133 provided on the other side. Accordingly, contrast (light and shade) with the sense of depth is generated from the separated part 133 toward the dense part 132 while suppressing blurring as compared with a case where the annular figures 131 are arranged at equal intervals on both sides of the smallest annular figure 131a in the tire circumferential direction CD, which creates innovative visual effects.

As the annular figures 131 are provided at intervals in the dense part 132, the annular figures 131 are not arranged too close to one another, which can easily mold the dense part 132 into a desired recessed and projected shape when the tire is vulcanization-molded.

As the plural annular figures 131 are arranged at equal intervals in the dense part 132 and the separated part 133, a smoother sense of depth is generated in the pattern 130. When the plural annular figures 131 are provided so that the interval of the annular figures 131 is gradually increased at a fixed rate from the annular figure 131 arranged in the inner side toward the outer side, the sense of depth created from the separated part 133 toward the dense part 132 can be emphasized.

In a case where the pneumatic tire 1 is a tire in which a rotation direction is designated, all patterns 130 to be provided on the surface of the sidewall 10 may be arranged so that the dense parts 132 are placed on the front side in a rotation direction RF (see Fig. 15). When the patterns 130 are arranged in this manner, the rotation direction can be indicated while having excellent designability.

### [Modification Examples of Second Embodiment]

The above embodiment is cited as an example and does not intend to limit the scope of the invention. The novel embodiment can be achieved in other various modes, and various omissions, replacements, modifications may occur in a scope not departing from the scope of the invention as defined by the appended claims.

For example, the shape of the plural annular figures 131 is not limited to the approximately elliptical shape in the embodiment. Any annular figure that is longer in the tire circumferential direction CD than in the tire radial direction RD when seen from the direction perpendicular to the surface of the sidewall 10 may be adopted. A preferred shape among such annular figures is a shape called oval. The oval is a closed annular shape mainly formed by a curved line (for example, more than half of the entire length of lines forming a contour of the annular figure 131 is a curved line). The oval includes an ellipse, a perfect circle, an ovoid shape, and the like, in addition to the elliptical shape in the embodiment. The oval also includes a closed curved line formed by crossing between the surface of a cone and a plane perfectly traversing the cone.

In the above embodiment, all patterns 130 are provided on the surface of the sidewall 10 so that the dense parts 132 are placed on one side in the tire circumferential direction CD; however, various arrangements of the dense parts 132 can be considered.

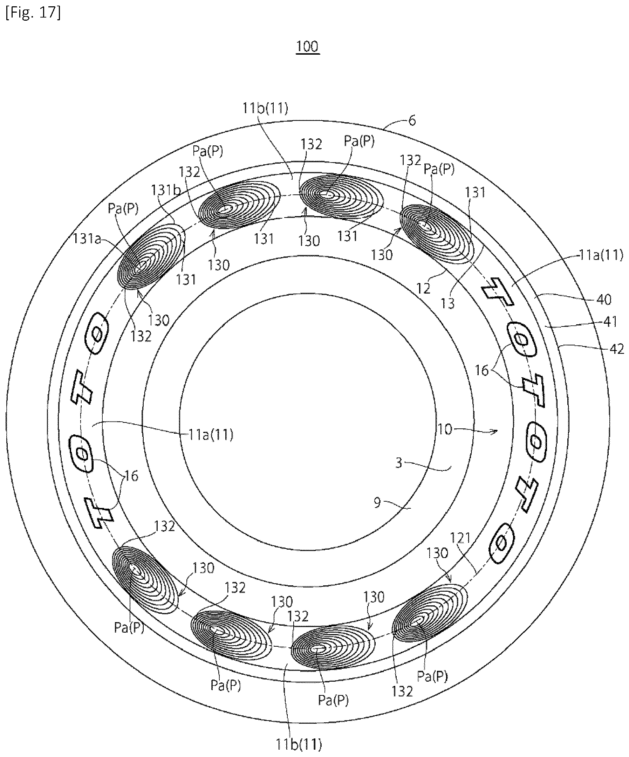

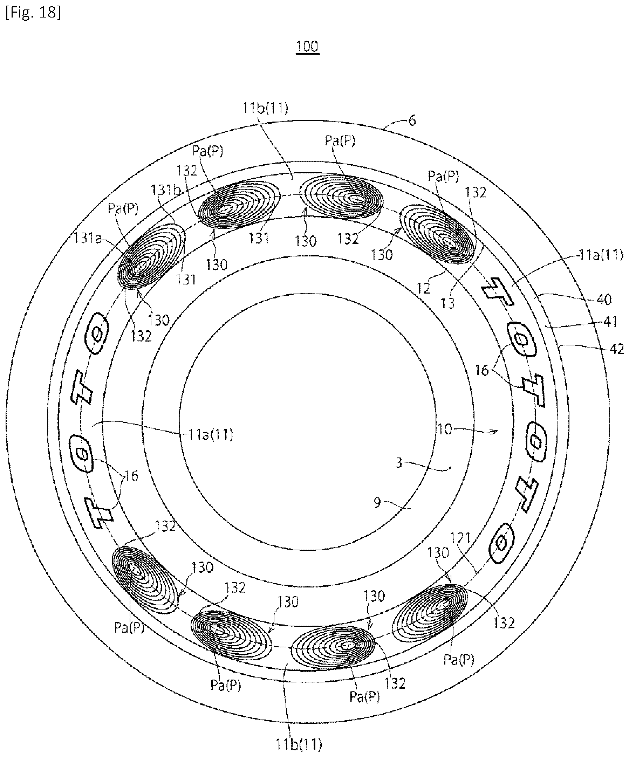

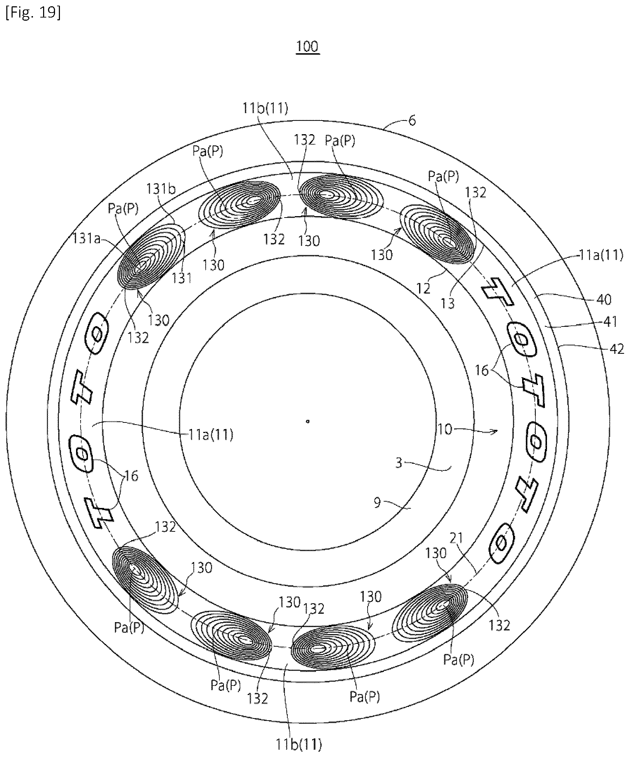

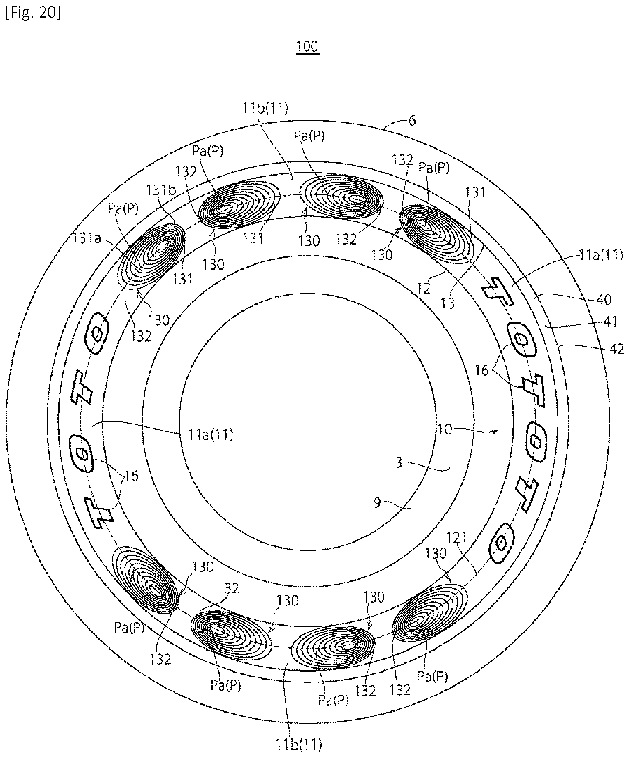

For example, as shown in Fig. 17, the patterns 130 may be arranged so that the dense parts 132 are directed to one of the marking areas 11a (the marking area 11a on the left side in Fig. 17), or the patterns 130 may be arranged so that the dense parts 132 are directed to the marking areas 11a close to the patterns 130 as shown in Fig. 18. It is also preferable that the patterns 130 are arranged so that directions of the dense parts 132 are alternately changed in the tire circumferential direction CD as shown in Fig. 19 and Fig. 20. When a pair of patterns 130 adjacent to the marking area 11a in the tire circumferential direction CD are arranged so that the dense parts 32 are directed to the marking area 11a as shown in Fig. 17, Fig. 18 and Fig. 19, a customer tends to fix his/her eyes on the marking area 11a sandwiched by the dense parts 32, which can emphasize the markings 16 provided in the making area 11a.

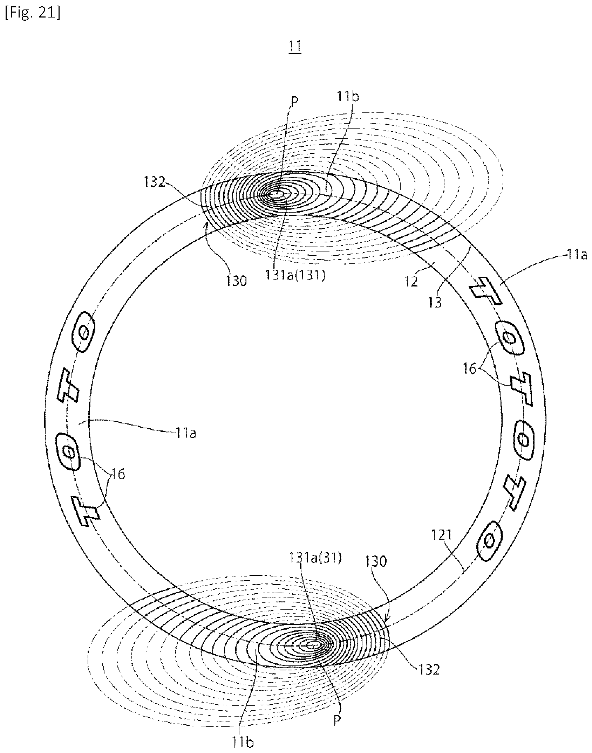

When many annular figures 131 are provided in one pattern 130, parts of large annular figures 131 may be broken without being held inside the decorative area 11 as shown in Fig. 21. In such case, it is preferable to provide many annular figures 131 so that five or more annular figures 31 each connected in a ring shape in one pattern 130 are held inside the decorative area 11.

Although two pattern areas 11b are provided on one sidewall 10 in the above embodiment, one pattern area 11b or three or more pattern areas 11b may be provided on one sidewall 10.

Moreover, four patterns 130 are provided in one pattern area 11b in the above embodiment; however, an arbitrary number of patterns 130 may be provided in one pattern area 11b.

The respective dimensions in the specification are values in an unloaded normal state where the pneumatic tire is fitted to a normal rim and is filled with a normal internal pressure. Examples of the normal rim include the "standard rim" in the JATMA standard, and the "Measuring Rim" in the TRA standard and in the ETRTO standard. Examples of the normal internal pressure include the "maximum air pressure" in the JATMA standard, the "maximum value" described in "TIRE LOAD LIMITS AT VARIOUS COLD INFLATION PRESSURES" in the TRA standard, and "INFLATION PRESSURE" in the ETRTO standard. However, the normal internal pressure is normally set to 180 kPa in the case of the tire for the passenger car, and set to 220 kPa in the case of a tire on which "Extra Load" or "Reinforced" is written.

Concerning a range of various numerical values described in the specification, an upper limit value and a lower limit value can be arbitrarily combined respectively, and all combinations are described as a preferable range of numerical values in the specification. The description of the range of numerical values "X to Y" means X or more to Y or less.

### Reference Signs List

- 1:: pneumatic tire
- 4:: belt
- 6:: tread rubber
- 7:: sidewall rubber
- 9:: bead
- 10:: sidewall
- 11:: decorative area
- 11a:: marking area
- 11b:: pattern area
- 12:: inner diameter-side line
- 13:: outer diameter-side line
- 16:: marking
- 30:: pattern
- 31:: annular figure
- 32:: overlapping part
- 33:: first separated part
- 34:: second separated part

## Claims

1. A pneumatic tire (1, 100) comprising:
a pattern (30, 130) on a surface of a sidewall (7),
wherein the pattern (30, 130) has a plurality of annular figures (31, 131) that are longer in a tire circumferential direction (CD) than in a tire radial direction (RD), and
the plural annular figures (31, 131) have different sizes from one another, which are arranged so that a larger annular figure (31, 131) is placed on an outer side of a smaller annular figure (31, 131) without crossing each other, and so that intervals of the annular figures (31, 131) differ on one side and the other side in the tire circumferential direction.

2. The pneumatic tire according to claim 1,
wherein the plural annual figures (31) are arranged so that the larger annular figure (31) is placed on the outer side of the smaller annular figure (31) to form an overlapping part (32) where the annular figures (31) overlap one another at one end part in the tire circumferential direction and to form separated parts (33, 34) where the annular figures are arranged at intervals on the other side in the tire circumferential direction and on both sides in the tire radial direction.

3. The pneumatic tire according to claim 2,
wherein the plural annular figures (31) are provided at equal intervals at the separated part (33) on the other side in the tire circumferential direction.

4. The pneumatic tire according to claim 2 or 3, further comprising:
a marking area (11a) in which one or a plurality of markings (16) are provided and a pair of patterns (30) on the surface of the sidewall (7),
wherein the pair of patterns (30) are arranged on both sides in the tire circumferential direction of the marking area (11a) so that the overlapping parts (32) are directed to the marking area (11a).

5. The pneumatic tire according to claim 2 or 3,
wherein the pneumatic tire (1) is a tire in which a rotation direction is designated, and
the patterns (30) are provided on the surface of the sidewall (7) so that the overlapping parts (32) are placed on the front side in the rotation direction.

6. The pneumatic tire according to claim 1,
wherein the plural annular figures (130) are arranged so that the larger annular figure (130) is placed on the outer side of the smaller annular figure (130) with an interval to form a dense part (132) on one side in the tire circumferential direction, in which an interval of the annular figures (130) is smaller than on the other side.

7. The pneumatic tire according to claim 6,
wherein the interval of the plural annular figures (130) varies in the dense part (132).

8. The pneumatic tire according to claim 6 or 7, further comprising:
a marking area (11a) in which one or a plurality of markings (16) are provided and a pair of patterns (130) on the surface of the sidewall (7),
wherein the pair of patterns (130) are arranged on both sides in the tire circumferential direction of the marking area (11a) so that the dense parts (132) are directed to the marking area (11a).

9. The pneumatic tire according to claim 6 or 7,
wherein the pneumatic tire (100) is a tire in which a rotation direction is designated, and
the patterns (130) are provided on the surface of the sidewall (7) so that the dense parts (132) are placed on the front side in the rotation direction.

10. The pneumatic tire according to any one of claims 6 to 9,
wherein an interval between the annular figures (131) adjacent to each other in an outer side in the tire radial direction is larger than an interval on an inner side in the tire radial direction.

11. The pneumatic tire according to any one of claims 1 to 10,
wherein the annular figures (31, 131) are patterns of an ovoid shape.

12. The pneumatic tire according to any one of claims 1 to 11,
wherein a ratio of a length in the tire radial direction (RD) to a length in the tire circumferential direction (CD) in the annular figures (31, 131) is preferably 0.5 or more to 0.8 or less.

13. The pneumatic tire according to any one of claims 1 to 12,
wherein the plural annular figures (31, 131) are formed of recessed groove recessed from the surface of the sidewall (7) or ridges protruding from the surface of the sidewall (7), and
a cross-sectional shape of the plural annular figures (31, 131) includes a triangular shape, a trapezoidal shape, or a semicircular shape.

14. The pneumatic tire according to any one of claims 1 to 13,
wherein an area where a plurality of ridges (41) extending in the tire radial direction (RD) are arranged at equal intervals in the tire circumferential direction (CD) is provided on the sidewall (7) at an outer side in the tire radial direction of the decorative area (11) where the annular figures (31, 131) are provided, in which a dimension of the area in the tire radial direction (RD) is 5 mm or more to 12 mm or less.

## Patentansprüche

1. Pneumatischer Reifen (1, 100), welcher aufweist:
ein Muster (30, 130) auf einer Oberfläche einer Seitenwand (7),
wobei das Muster (30, 130) eine Vielzahl an ringförmigen Figuren (31, 131) aufweist, die in einer Umfangsrichtung (CD) des Reifens länger als in einer Radialrichtung (RD) des Reifens sind, und
die mehreren ringförmigen Figuren (31, 131) unterschiedliche Größen voneinander aufweisen, die angeordnet sind, so dass eine größere ringförmige Figur (31, 131) auf einer Außenseite einer kleineren ringförmigen Figur (31, 131) angeordnet ist, ohne sich gegenseitig zu kreuzen, und so dass sich die Abstände der ringförmigen Figuren (31, 131) auf einer Seite und der anderen Seite in der Umfangsrichtung des Reifens unterscheiden.

2. Pneumatischer Reifen nach Anspruch 1, wobei
die mehreren ringförmigen Figuren (31) so angeordnet sind, dass die größere ringförmige Figur (31) auf der Außenseite der kleineren ringförmigen Figur (31) angeordnet ist, um einen überlappenden Abschnitt (32) zu bilden, wobei die ringförmigen Figuren (31) einander an einem Endabschnitt in der Umfangsrichtung des Reifens überlappen, und um getrennte Abschnitte (33, 34) zu bilden, wobei die ringförmigen Figuren auf der anderen Seite in der Umfangsrichtung des Reifens und auf beiden Seiten in der Radialrichtung des Reifens in Abständen angeordnet sind.

3. Pneumatischer Reifen nach Anspruch 2, wobei
die mehreren ringförmigen Figuren (31) in gleichen Abständen an dem abgetrennten Abschnitt (33) auf der anderen Seite in der Umfangsrichtung des Reifens vorgesehen sind.

4. Pneumatischer Reifen nach Anspruch 2 oder 3, welcher ferner aufweist:
einen Markierungsbereich (11a), in dem eine oder eine Vielzahl an Markierungen (16) vorgesehen sind, und ein Paar an Mustern (30) auf der Oberfläche der Seitenwand (7),
wobei das Paar der Muster (30) auf beiden Seiten in der Umfangsrichtung des Reifens des Markierungsbereichs (11a) auf eine solche Weise angeordnet ist, dass die überlappenden Teile (32) auf den Markierungsbereich (11a) gerichtet sind.

5. Pneumatischer Reifen nach Anspruch 2 oder 3, wobei
der pneumatische Reifen (1) ein Reifen ist, bei dem eine Drehrichtung festgelegt ist, und
die Muster (30) auf der Oberfläche der Seitenwand (7) so vorgesehen sind, dass die überlappenden Teile (32) auf der Vorderseite in der Drehrichtung angeordnet sind.

6. Pneumatischer Reifen nach Anspruch 1, wobei
die mehreren ringförmigen Figuren (130) so angeordnet sind, dass die größere ringförmige Figur (130) auf der Außenseite der kleineren ringförmigen Figur (130) mit einem Abstand angeordnet ist, um einen dichten Abschnitt (132) auf einer Seite in der Umfangsrichtung des Reifens zu bilden, wobei ein Abstand der ringförmigen Figuren (130) kleiner als auf der anderen Seite ist.

7. Pneumatischer Reifen nach Anspruch 6, wobei
der Abstand der mehreren ringförmigen Figuren (130) in dem dichten Abschnitt (132) variiert.

8. Pneumatischer Reifen nach Anspruch 6 oder 7, welcher aufweist:
einen Markierungsbereich (11a), in dem eine oder eine Vielzahl an Markierungen (16) vorgesehen sind, und ein Paar an Mustern (130) auf der Oberfläche der Seitenwand (7), wobei
das Paar der Muster (130) auf beiden Seiten in der Umfangsrichtung des Reifens des Markierungsbereichs (11a) auf eine solche Weise angeordnet ist, dass die dichten Abschnitte (132) auf den Markierungsbereich (11a) gerichtet sind.

9. Pneumatischer Reifen nach Anspruch 6 oder 7, wobei
der pneumatische Reifen (100) ein Reifen ist, bei dem eine Drehrichtung festgelegt ist, und
die Muster (130) auf der Oberfläche der Seitenwand (7) so vorgesehen sind, dass die dichten Abschnitte (132) auf der Vorderseite in der Drehrichtung angeordnet sind.

10. Pneumatischer Reifen nach einem der Ansprüche 6 bis 9, wobei
ein Abstand zwischen den ringförmigen Figuren (131), die auf einer äußeren Seite in der Radialrichtung des Reifens aneinandergrenzen, größer als ein Abstand auf einer inneren Seite in der Radialrichtung des Reifens ist.

11. Pneumatischer Reifen nach einem der Ansprüche 1 bis 10, wobei
die ringförmigen Figuren (31, 131) Muster mit einer eiförmigen Form sind.

12. Pneumatischer Reifen nach einem der Ansprüche 1 bis 11, wobei
ein Verhältnis einer Länge in der Radialrichtung (RD) des Reifens zu einer Länge in der Umfangsrichtung (CD) des Reifens in den ringförmigen Figuren (31, 131) bevorzugt 0,5 oder mehr bis 0,8 oder weniger beträgt.

13. Pneumatischer Reifen nach einem der Ansprüche 1 bis 12, wobei
die mehreren ringförmigen Figuren (31, 131) aus einer von der Oberfläche der Seitenwand (7) vertieften Rille oder aus von der Oberfläche der Seitenwand (7) vorstehenden Rippen gebildet sind, und
eine Querschnittsform der mehreren ringförmigen Figuren (31, 131) eine dreieckige Form, eine trapezförmige Form oder eine halbkreisförmige Form umfasst.

14. Pneumatischer Reifen nach einem der Ansprüche 1 bis 13, wobei
ein Bereich, in dem eine Vielzahl an Rippen (41), die sich in der Radialrichtung (RD) des Reifens erstrecken, in gleichen Abständen in der Umfangsrichtung (CD) des Reifens angeordnet sind, auf der Seitenwand (7) an einer Außenseite in der Radialrichtung des Reifens des dekorativen Bereichs (11) vorgesehen ist, in dem die ringförmigen Figuren (31, 131) vorgesehen sind, wobei eine Abmessung des Bereichs in der radialen Richtung (RD) des Reifens 5 mm oder mehr bis 12 mm oder weniger beträgt.

## Revendications

1. Bandage pneumatique (1, 100), comprenant :
un motif (30, 130) sur une surface d'un flanc (7),
dans lequel le motif (30, 130) comporte une pluralité de figures annulaires (31, 131) qui sont plus longues dans une direction circonférentielle (CD) du bandage que dans une direction radiale (RD) du bandage, et
la pluralité de figures annulaires (31, 131) ont des tailles différentes les unes des autres, qui sont agencées de sorte qu'une figure annulaire (31, 131) plus grande soit placée sur un côté extérieur d'une figure annulaire (31, 131) plus petite sans qu'elles se croisent, et de sorte que les intervalles des figures annulaires (31, 131) diffèrent d'un côté et de l'autre côté dans la direction circonférentielle du bandage.

2. Bandage pneumatique selon la revendication 1,
dans lequel les multiples figures annulaires (31) sont agencées de sorte que la figure annulaire plus grande (31) soit placée sur le côté extérieur de la figure annulaire plus petite (31) pour former une partie de chevauchement (32) où les figures annulaires (31) se chevauchent au niveau d'une partie d'extrémité dans la direction circonférentielle du bandage et pour former des parties séparées (33, 34) où les figures annulaires sont agencées à des intervalles sur l'autre côté dans la direction circonférentielle du bandage et sur les deux côtés dans la direction radiale du bandage.

3. Bandage pneumatique selon la revendication 2,
dans lequel les multiples figures annulaires (31) sont disposées à des intervalles égaux au niveau de la partie séparée (33) sur l'autre côté dans la direction circonférentielle du bandage.

4. Bandage pneumatique selon la revendication 2 ou 3, comprenant en outre :
une zone de marquage (11a) dans laquelle sont disposés un ou une pluralité de marquages (16) et une paire de motifs (30) sur la surface du flanc (7),
dans lequel la paire de motifs (30) est agencée sur les deux côtés dans la direction circonférentielle de bandage de la zone de marquage (11a) de sorte que les parties de chevauchement (32) soient orientées vers la zone de marquage (11a).

5. Bandage pneumatique selon la revendication 2 ou 3,
dans lequel le bandage pneumatique (1) est un bandage dans lequel une direction de rotation est désignée, et les motifs (30) sont fournis sur la surface du flanc (7) de sorte que les parties de chevauchement (32) soient placées sur le côté avant dans la direction de rotation.

6. Bandage pneumatique selon la revendication 1,
dans lequel les multiples figures annulaires (130) sont agencées de sorte que la figure annulaire plus grande (130) soit placée sur le côté extérieur de la figure annulaire plus petite (130) avec un intervalle pour former une partie dense (132) sur un côté dans la direction circonférentielle du bandage, dans lequel un intervalle des figures annulaires (130) est plus petit que sur l'autre côté.

7. Bandage pneumatique selon la revendication 6,
dans lequel l'intervalle de la pluralité de figures annulaires (130) varie dans la partie dense (132).

8. Bandage pneumatique selon la revendication 6 ou 7, comprenant en outre :
une zone de marquage (11a) dans laquelle est/sont disposé(s) un ou une pluralité de marquages (16) et une paire de motifs (130) sur la surface du flanc (7),
dans lequel la paire de motifs (130) est agencée sur les deux côtés dans la direction circonférentielle de la zone de marquage (11a) de sorte que les parties denses (132) soient orientées vers la zone de marquage (11a).

9. Bandage pneumatique selon la revendication 6 ou 7,
dans lequel le bandage pneumatique (100) est un bandage dans lequel une direction de rotation est désignée, et
les motifs (130) sont fournis sur la surface du flanc (7) de sorte que les parties denses (132) soient placées sur le côté avant dans la direction de rotation.

10. Bandage pneumatique selon l'une quelconque des revendications 6 à 9, dans lequel un intervalle entre les figures annulaires (131) adjacentes l'une à l'autre sur un côté extérieur dans la direction radiale du bandage est plus grand qu'un intervalle sur un côté intérieur dans la direction radiale du bandage.

11. Bandage pneumatique selon l'une quelconque des revendications 1 à 10, dans lequel les figures annulaires (31, 131) sont des motifs de forme ovoïde.

12. Bandage pneumatique selon l'une quelconque des revendications 1 à 11, dans lequel un rapport d'une longueur dans la direction radiale (RD) du bandage à une longueur dans la direction circonférentielle (CD) du bandage dans les figures annulaires (31, 131) est de préférence supérieur ou égal à 0,5 et inférieur ou égal à 0,8.

13. Bandage pneumatique selon l'une quelconque des revendications 1 à 12,
dans lequel les multiples figures annulaires (31, 131) sont faites de rainures évidées, évidées à partir de la surface du flanc (7) ou de crêtes faisant saillie à partir de la surface du flanc (7), et
une forme de section transversale des multiples figures annulaires (31, 131) comprend une forme triangulaire, une forme trapézoïdale ou une forme semi-circulaire.

14. Bandage pneumatique selon l'une quelconque des revendications 1 à 13, dans lequel une zone où une pluralité de crêtes (41) s'étendant dans la direction radiale (RD) du bandage sont agencées à des intervalles égaux dans la direction circonférentielle (CD) du bandage est fournie sur le flanc (7) au niveau d'un côté extérieur, dans la direction radiale du bandage, de la zone décorative (11), où les figures annulaires (31, 131) sont disposées, dans lequel une dimension de la zone dans la direction radiale (RD) du bandage est supérieure ou égale à 5 mm et inférieure ou égale à 12 mm.
